(19) Europäisches Patentamt
European Patent Office
Office européen des brevets

(11) Veröffentlichungsnummer : **0 116 930 B2**

(12) **NEUE EUROPÄISCHE PATENTSCHRIFT**

(45) Veröffentlichungstag der neuen Patentschrift : **26.02.92 Patentblatt 92/09**

(51) Int. Cl.$^5$ : **C08F 220/04,** C08F 8/14, C11D 3/37, // (C08F220/04, 222:00)

(21) Anmeldenummer : **84101463.2**

(22) Anmeldetag : **13.02.84**

# (54) Copolymerisate, ihre Herstellung und ihre Verwendung als Hilfsmittel in Wasch- und Reinigungsmitteln.

(30) Priorität : **18.02.83 DE 3305637**

(43) Veröffentlichungstag der Anmeldung : **29.08.84 Patentblatt 84/35**

(45) Bekanntmachung des Hinweises auf die Patenterteilung : **06.08.86 Patentblatt 86/32**

(45) Bekanntmachung des Hinweises auf die Entscheidung über den Einspruch : **26.02.92 Patentblatt 92/09**

(84) Benannte Vertragsstaaten : **AT BE CH DE FR GB IT LI NL SE**

(56) Entgegenhaltungen :
**EP-A- 0 058 073**
**EP-A- 0 076 992**
**DE-A- 2 541 625**
**US-A- 3 708 445**
**US-A- 3 719 647**

(73) Patentinhaber : **BASF Aktiengesellschaft**
**Carl-Bosch-Strasse 38**
**W-6700 Ludwigshafen (DE)**

(72) Erfinder : **Denzinger, Walter**
**Wormser Landstrasse 65**
**W-6720 Speyer (DE)**
Erfinder : **Hartmann, Heinrich, Dr.**
**Weinheimer Strasse 46**
**W-6703 Limburgerhof (DE)**
Erfinder : **Trieselt, Wolfgang, Dr.**
**Alwin-Mittasch-Platz 1**
**W-6700 Ludwigshafen (DE)**
Erfinder : **Mueller, Richard, Dr.**
**Sonnenwendstrasse 33**
**W-6702 Bad Duerkheim (DE)**
Erfinder : **Diessel, Paul**
**Asternstrasse 16**
**W-6704 Mutterstadt (DE)**
Erfinder : **Hettche, Albert, Dr.**
**Kleiststrasse 12**
**W-6717 Hessheim (DE)**

EP 0 116 930 B2

## Beschreibung

Die Erfindung betrifft neue wasserlösliche Copolymerisate aus ethylenisch ungesättigten Mono- und Dicarbonsäuren, die gegebenenfalls bis zu 15 Gew.-% carboxylgruppenfreie Monomere enthalten und die bis zu 60 Gew.-%, bezogen auf die Carbonsäuren, mit einer speziellen Hydroxylverbindung verestert sind, die Herstellung derartiger Copolymerisate und ihre Verwendung als Hilfsmittel in Wasch-, Reinigungs- und Geschirrspülmitteln.

Aus der US-A-3 719 647 sind durhc Ethylenoxid oder Polyethylenoxidreste mit einer endständigen Hydroxylgruppe teilveresterte Polymerisate aus Acryl- und/oder Methacrylsäure als Sequestriermittel für Calciumionen in Waschmitteln bekannt. Ihre vergrauungsverhindernde Wirkung insbesondere in phosphatreduzierten oder phosphatfreien Waschmitteln, ist gegenüber den verschiedenen Geweben sehr unterschiedlich und nicht optimal.

Eine Aufgabe der vorliegenden Erfindung ist, neue Waschmittelhilfsstoffe, die die als Gerüststoffe verwendeten Phosphate oder Nitrilotriessigsäure, Zeolithe und Polycarbonsäuren ganz oder teilweise zu ersetzen vermögen und die gleichzeitig waschaktiven Stoffen bzw. Waschmitteln optimale Eigenschaften im Hinblick auf die primären und sekundären Wasch- wirkungen verleihen, zur Verfügung zu stellen.

Die Lösung der Aufgabe wird erreicht durch:

wasserlösliche Copolymerisate und ihre wasserlöslichen Salze aus 40 bis 90 Gew.-% mindestens einer ethylenisch ungesättigten Monocarbonsäure mit 3 bis 5 C-Atomen und 60 bis 10 Gew.-% mindestens einer ethylenisch ungesättigten Dicarbonsäure mit 4 bis 8 C-Atomen und/oder des entsprechenden Dicarbonsäureanhydrids, dadurch gekennzeichnet, dass sie mit 2 bis 60 Gew.-%, bezogen auf das Gesamtgewicht der Carbonsäuren und gegebenenfalls Carbonsäureanhydride, wenigstens einer Verbindung der Formel I

$$F^1Z[(X^1)_m \cdot (X^2)_n \cdot (X^3)_o]H \qquad I$$

in der

$R^1$ einen $C_1$-$C_{18}$-Alkylrest

Z ein Sauerstoffatom oder die Gruppe

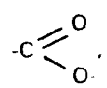

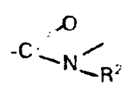 oder 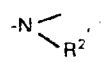

$R^2$ ein Wasserstoffatom eine Gruppe der Formel $[(X^1)_m \cdot (X^2)_n \cdot (X^3)_o]H$, oder einen Alkylrest mit 1 bis 4 C-Atomen, $X^1$ eine einpolymerisierte Ethylenoxid-, $X^2$ eine einpolymerisierte Propylenoxid- und $X^3$ eine einpolymerisierte Butylenoxid-Einheit und m, n und o ganze Zahlen von 0 bis 100 bedeuten, wobei die Summe m + n + o 1 bis 100 beträgt und die Alkylenoxideinheiten in Blöcken beliebiger Reihenfolge oder in statistischer Verteilung einpolymerisiert sind, verestert sind.

Ethylenisch ungesättigte Monocarbonsäuren als Monomere sind insbesondere Acrylsäure, Methacrylsäure, Crotonsäure oder Vinylmilchsäure, wovon Acrylsäure und Methacrylsäure bevorzuat und Acrylsäure besonders bevorzugt sind.

Ethylenisch ungesättigte Dicarbonsäuren als Monomere sind insbesondere Maleinsäure, Fumarsäure, Aconitsäure, Itaconsäure, Mesaconsäure, Citraconsäure und Methylenmanonsäure, wovon Maleinsäure besonders bevorzugt ist.

Anstelle der Dicarbonsäure können, wie dem Fachmann geläufig, deren Anhydride verwendet werden, soweit diese existieren. Soweit im folgenden bei der Angabe von Gewichtsverhältnissen auf das « Gesamtgewicht der Mono- und Dicarbonsäuren » oder auf das « Gesamtgewicht der carboxylgruppenhaltigen Monomeren » Bezug genommen wird, sollen diese Begriffe auch gegebenenfalls vorhandene Dicarbonsäureanhydride umfassen, und zwar berechnet als freie Säuren. Definitionsgemäss können jeweils Gemische mehrerer monomerer Monocarbonsäuren und/oder monomerer Dicarbonsäuren verwendet werden. Beispiele solcher Monomerenmischungen sind Acrylsäure und Methacrylsäure sowie Maleinsäure und Itaconsäure.

Bevorzugt wird jedoch jeweils eine Monocarbonsäure und eine Dicarbonsäure verwendet.

Die bevorzugten Copolymerisae enthalten 40 bis 70 Gew.-% Monocarbonsäure-, insbesondere Acrylsäureeinheiten und 30 bis 60 Gew.-% Dicarbonsäure(anhydrid)-, insbesondere Maleinsäure(anhydrid)- einheiten, berechnet als freie Carbonsäuren und bezogen auf das Geamtgewicht Mono- und Dicarbonsäuren in unveresterter Form.

Die erfindungsgemässen Copolymerisate sind unvollständig mit Verbindungen der Formel I verestert. Von diesen Verbindungen sind 2 bis 60, vorzugsweise 5 bis 50 Gew.-%, an Carboxylgruppen der Copolymerisate gebunden. Diese Angaben beziehen sich auf das Gesamtgewicht der in dem Copolymerisaten enthaltenen Mono- und Dicarbonsäure. Der untere Teil dieses Bereichs kommt vorzugsweise für Verbindungen der Formel I mit wenigen Alkylenoxid-Einheiten, der obere vorzugsweise für solche mit vielen Alkylenoxid-Einheiten in Betracht, ohne dass allerdings eine scharfe Grenze existiert. Unterhalb der unteren Mengengrenze nimmt die Wirksamkeit der erfindungsgemässen Produkte allmählich ab, insbesondere hinsichtlich der Vergrauungsinhibierung. In der Nähe und verstärkt jenseits der Obergrenze nimmt andererseits die Primärwaschkraftverstärkung und Inkrustierungsinhibierung ab. Besonders vorteilhaft bezüglich beider Effekte sind solche erfindungsgemässen Copolymerisate, die mit 8 bis 30 Gew.-% wenigstens einer Verbindung der Formel I verestert sind.

Bei den Verbindungen der Formel I kommen in Betracht als Alkylreste $R^1$ beispielsweise geradkettige und verzweigte $C_1$- bis $C_{18}$-Alkyle, wie Methyl, Ethyl, Isopropyl, n- und iso-Butyl, Ethylhexyl, iso-Decyl, iso-Tridecyl, Kokosfettalkyl, technische Gemische wie $C_{13}/C_{15}$- und $C_{12}/C_{14}$-Alkyl, $C_{16}/C_{18}$- Alkyl(Talgfettalkyl) und Stearyl.

Die angegebenen Alkylenoxideinheiten können sowohl als einpolymerisierte Blöcke beliebiger Reihenfolge als auch in statistischer Verteilung vorliegen, wobei für die einpolymerisierten Monomereinheiten entsprechend der Definition die Summe der Zahlenwerte m, n und o wenigstens 1 ist. Die Verbindung der Formel I muss also wenigstens eine Alkylenoxygruppe enthalten. Die obere Grenze von 100 Alkylenoxygruppen je Polyglykoletherkette in der Verbindung der Formel I ist nicht technisch bedingt (denn es gibt keine Anzeichen dafür, dass Verbindungen mit längeren Ketten unbrauchbar wären) sondern durch die Tatsache, dass die im Handel erhählichen Stalle der Formel I höchstens etwa 100 Alkylenoxygruppen enthalten. Die zur Veresterung verwendeten Hydroxyverbindungen sind bekannt oder nach bekannten Verlahren erhältlich und werden teilweise als Verbindungen mit Tensidcharakter technisch hergestellt.

Es kommen beispielsweise folgende Verbindungen mit OH-Gruppen in Frage:

$R^1Z[(X^1)_m \cdot (X^2)_n \cdot (X^3)_o]H$

| Nr. | $R^1$ | Z | $X^1$ $(C_2H_4O)$ m | $X^2$ $(C_3H_6O)$ n | $X^3$ $(C_4H_8O)$ o | Alkylenoxid-verteilung |
|---|---|---|---|---|---|---|
| 1 | $CH_3$ | O | 2 | — | — | Block |
| 2 | $C_2H_5$ | « | 2 | — | — | » |
| 3 | » | » | 3 | — | — | » |
| 4 | $C_4H_9$, n | » | 2 | — | — | » |
| 5 | $C_4H_9$, iso | » | 3 | — | — | » |
| 6 | $CH_3$ | » | | 1 | — | » |
| 7 | $C_{13}/C_{15}$-Alkyl, iso 1) | » | 3 | — | — | » |
| 8 | » | » | 5 | — | — | » |
| 9 | » | » | 7 | — | — | » |
| 10 | » | » | 8 | — | — | » |
| 11 | » | » | 10 | — | — | » |
| 12 | » | » | 11 | — | — | » |
| 13 | » | » | 12 | — | — | » |
| 14 | » | » | 30 | — | — | » |
| 15 | $C_{12}/C_{14}$-Alkyl 2) | » | 8 | — | — | » |
| 16 | $C_{16}/C_{18}$-Alkyl 3) | » | 11 | — | — | » |
| 17 | » | » | 18 | — | — | » |
| 18 | » | » | 25 | — | — | » |
| 19 | » | » | 50 | — | — | » |
| 20 | » | » | 80 | — | — | » |
| 21 | $C_{10}$-Alkyl, iso 1) | » | 3 | — | — | » |
| 22 | » | » | 5 | — | — | » |
| 23 | » | » | 6 | — | — | » |
| 24 | » | » | 7 | — | — | » |
| 25 | » | » | 11 | — | — | » |
| 33 | Oleyl | $-CH_2-NH-$ | 12 | — | — | » |
| 34 | » | 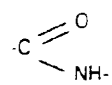 | 10 | — | — | » |
| 35 | » | 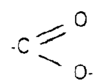 | 6 | — | — | » |
| 36 | $C_{13}/C_{15}$-Alkyl 1) | O | 16 | 4 | — | » |
| 37 | » | » | 2 | 4 | — | » |
| 38 | » | » | 9 | — | 2 | » |
| 39 | » | » | 8 | 7 | — | statistisch |
| 40 | $C_{13}/C_{15}$-Alkyl 1) | O | 6 | 13 | — | Block |
| 41 | » | O | 6 | 4 | — | » |

*(Fortsetzung Tabelle)*

| Nr. | $R^1$ | Z | $X^1$ ($C_2H_4O$) m | $X^2$ ($C_3H_6O$) n | $X^3$ ($C_4H_8O$) o | Alkylenoxid-verteilung |
|---|---|---|---|---|---|---|
| 42 | $C_{13}/C_{15}$-Alkyl 1) | O | 12 | 16 | — | Block |
| 43 | » | O | 5 | 7 | — | » |
| 44 | » | O | 4 | 2 | — | » |
| 45 | $C_9/C_{11}$-Alkyl 1) | O | 7 | 1 | — | » |
| 46 | $CH_3$ | O | — | 3 | 1 | » |
| 47 | $C_2H_5$ | O | 4 | 2 | 1 | » |

1) aus Oxosynthese
2) aus Zieglersynthese
3) aus Talgfett

Die erfindungsgemässen Copolymerisate können zusätzlich modifiziert werden, indem bei der Herstellung bis zu 15%, bezogen auf das Gesamtgewicht der carboxylgruppenhaltigen Monomeren in ihrer unveresterten Form, carboxylgruppenfreie ethylenisch ungesättigte Monomere, die noch zu zumindest in ihrer Salzform wasserlöslichen Polymerisaten führen, einpolymerisiert werden. Solche carboxylgruppenfreien Monomere sind beispielsweise Alkylester, gegebenenfalls mit Hydroxyl- oder Aminogruppen im Esterrest, Alkohole, Sulfonsäuren und Ether mit ethylenisch ungesättigten Resten oder Olefine, Diolefine und Styrol.

Im einzelnen werden als carboxylgruppenfreie Monomere beispielsweise genannt: 2-Acrylamido-2-methylpropansulfonsäure, Vinylsulfonsäure, Allylsulfonsäure, Vinylphosphonsäure, Allylphosphonsäure, Vinylacetat, Vinylpropionat, Methyl(meth)acrylat, Ethyl(meth)acrylat, Hydroxyethyl(meth)acrylat, Hydroxypropyl(meth)acrylat, Dialkylaminoethyl(meth)acrylat, Vinylglycol, Allylalkohol, Ethylen, Propylen, iso-Butylen, Methyl-vinylether, Ethyl-vinylether, Isobutyl-vinylether, Styrol oder Butadien, wobei der Zusatz von 2-Acrylamino-2-methylpropansulfonsäure, Vinylphosphonsäure, Vinylacetat, Vinylpropionat, Hydroxypropylacrylat, Dialkylaminoalkyl (meth) acrylat und Methyl-vinylether bevorzugt ist.

Die Herstellung der erfindungsgemässen neuen Copolymeren kann nach 2 Methoden erfolgen:

1. Durch Veresterung der Copolymeren aus Monocarbonsäuren und Dicarbonsäuren und/oder deren Anhydriden und gegebenenfalls eines carboxylgruppenfreien Monomeren mit einer Verbindung der Formel I in an sich üblicher Weise oder
2. durch Copolymerisation von Monocarbonsäuren, Dicarbonsäuren und/oder deren Anhydriden und gegebenenfalls carboxylgruppenfreien Monomeren mit Estern der Monocarbonsäuren und/oder Mono- und/oder Diestern der Dicarbonsäuren mit einer Verbindung der Formel I in an sich üblicher Weise. Diese Ester entsprechen den Formeln II und III

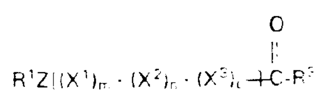 II

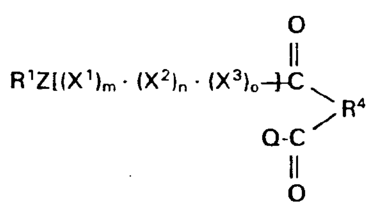 III

wobei $R^3$ den carboxylgruppenfreien, 2 bis 4 Kohlenstoffatome enthaltenden Rest einer ethylenisch ungesättigten Monocarbonsäure, $R^4$ den carbaxylgruppenfreien, 2 bis 6 Kohlenstoffatome enthaltenden Rest einer ethylenisch ungesättigten Dicarbonsäure, Q eine Hydroxylgruppe oder den Rest der Formel $R^1Z[(X^1)_m \cdot (X^2)_n \cdot (X^3)_o]$ bedeuten und $R^1$, Z, $X^1$, $X^2$, $X^3$, m, n und o die oben bei Formel I angegebene Bedeutung haben.

Nach dem ersten Verfahren geht man von Polymeren aus Monocarbonsäuren und Dicarbonsäure- (anhydriden) mit gegebenenfalls einem carboxylgruppenfreien Monomeren aus, wie sie beispielsweise gemäss den deutschen Patentanmeldungen P 31 38 574.5, P 31 40 383.2, P 31 47 489.6, P 32 33 777.9, P 32 33 775.2

oder P 32 33 776.0 erhältlich sind und verestert die durch Trocknung erhaltenen Polymerisate in einem inerten Lösungsmittel, wie Tolual oder Xylol, in Gegenwart eines üblichen Veresterungskatalysators mit den Verbindungen der Formel I. Besonders geeignet für die Veresterung sind die Copolymeren aus Monacarbansäuren und Dicarbonsäureanhydriden, die bereits durch Suspensions- oder Fällungspolymerisation in aliphatischen und/oder aromatischen Kohlenwasserstoffen polymerisiert werden, beispielsweise gemäss den deutschen Patentanmeldungen P 32 33 777.9 und P 32 33 775.2.

In diesem Fall kann die Veresterung direkt in dem Medium durchgeführt werden, in dem auch die Polymerisation stattgefunden hat. Besonders einfach ist es, wenn die Dicarbonsäureanhydridgruppen enthaltenden Polymeren nur bis zur Monoesterbildung verestert werden. In diesem Fall entfällt das aufwendige Auskreisen von Wasser. Natürlich kann auch die Umsetzung von freien Carbonsäuregruppen mit den Verbindungen der Formel I erfolgen, wobei jedoch das gebildete Wasser aus dem System entfernt werden muss.

Besonders bevorzugt ist das zweite Verfahren. Die Herstellung der dafür benötigten monomeren Ester der Formeln II und/oder III kann nach üblichen Methoden durch Veresterung von ethylenisch ungesättigten Mono- und/oder Dicarbonsäuren oder ihrer Anhydride der oben bezeichneten Art mit Verbindungen der Formel I in Gegenwart von Katalysatoren wie p-Tolualsulfonsäure, Schwefelsäuren und dgl. beispielsweise in Toluol unter Auskreisen sich gegebenenfalls bildenden Wassers bei Temperaturen von 110 bis 150°C erfolgen. Um ein Polymerisieren während der Veresterung zu verhindern, empfiehlt es sich, in Gegenwart bekannter Stabilisatoren, wie beispielsweise Hydrochinonmonomethylester, zu arbeiten. Auch hier lassen sich die Monoester der Formel III mit Q = OH durch Reaktion der Verbindung der Formel I und eines Dicarbonsäureanhydrids bei Temperaturen von 100 bis 150°C ohne Lösungsmittel besonders einfach herstellen.

Die Herstellung der Copolymeren nach dem zweiten Verfahren kann durch Suspensionspolymerisation, Fällungspolymerisation und Lösungspolymerisation erfolgen, wobei die Lösungspolymerisation in Wasser bevorzugt ist.

Bei der Suspensionspolymerisation erfolgt die Copolymerisation in salchen Lösungsmitteln, in denen die Monomeren höchstens zum Teil löslich und die Copolymeren unlöslich sind und damit ausfallen. Bei der Suspensionspolymerisation ist es unbedingt erforderlich, ein Schutzkolloid zur Verhinderung von Aggregatbildung zuzusetzen. Als Lösungsmittel sind beispielsweise geradkettige und verzweigte aliphatische und cycloaliphatische Kohlenwasserstoffe geeignet, wobei jedoch auch jedes andere Lösungsmittel, das den angegebenen Erfordernissen entspricht, eingesetzt werden kann. Vorzugsweise seien beispielsweise genannt Pentan, Hexan, Heptan, Octan, Isooctan, Cyclohexan, Methylcyclohexan, Dimethylcyclohexan und Diethylcyclohexan, wobei Cyclohexan, Methylcyclohexan und Isooctan bevorzugt sind. Als Schutzkolloide zur Verhinderung der Aggregatbildung sind polymere Stoffe geeignet, die in den Lösungsmitteln gut löslich sind, keine Reaktion mit dem Monomeren eingehen und möglichst hydrophil sind. Geeignet sind beispielsweise Copolymere des Maleinsäureanhydrids mit Vinylalkylethern mit 10 bis 20 C-Atomen im Alkylrest oder mit Olefinen mit 8 bis 20 C-Atomen sowie deren an den Maleinsäureeinheiten eine oder zwei Estergruppen von $C_{10}$- bis $C_{20}$-Alkoholen oder eine oder zwei Amidgruppen von $C_{10}$- bis $C_{20}$-Alkylaminen tragende Derivate sowie Polyalkylvinylether, deren Alkylgruppen 1 bis 20 C-Atome enthalten, wie beispielsweise Polymethyl-, Polyethyl- und Polyisobutylvinylether, die auch bevorzugt sind. Die zugesetzten Mengen an Schutzkolloid liegen üblicherweise bei 0,05 bis 4 Gew.-% (berechnet auf eingesetzte Monomere), vorzugsweise 0, 1 bis 2%, wobei es oftmals besonders günstig ist, mehrere Schutzkolloide zu kombinieren.

Bei der Fällungspalymerisation erfolgt die Copolymerisation in solchen Lösungsmitteln, in denen die Monomeren löslich und die Polymeren dann unlöslich sind und ausfallen. Als Lösungsmittel kommen hierfür in Frage alkylsubstituierte Benzalkohlenwasserstoffe oder aliphatische Halogenkohlenwasserstoffe sowie Mischungen davon; wobei jedoch auch jedes andere Lösungsmittel, das den angegebenen Erfordernissen entspricht, eingesetzt werden kann. Vorzugsweise seien beispielsweise genannt, Toluol, p-Xylol, m-Xylol, o-Xylol sowie deren techn. Gemische, Ethylbenzol, Diethylbenzal, Methylethylbenzal, Methylenchlorid, 1,1- und 1,2-Dichlorethan, 1,1,1-Trichlorethan, 1,1,2-Trichlorethylen, 1,1,2--Trichlorethan, Perchlorethylen, 1,2-Dichlorpropan, Butylchlorid, 1,1,2-Trichlor- 1,2,2-trifluorethan, 1,1,1,2-Tetrachlor-2,2-difluorethan und 1,1,2,2--Tetrachlor- 1, 2-difluorethan, wobei Toluol, Xylol in Form seiner technischen Gemische, 1,1,1-Trichlorethan und die genannten Fluorchlorkohlenwasserstoffe bevorzugt sind und Toluol von besonderem techn. Interesse ist.

Auch bei der Durchführung der Fällungspolymerisation ist es oftmals von Vorteil, besonders wenn bei Konzentrationen von 50% und mehr gearbeitet wird, ein Schutzkolloid zur Verhinderung der Aggregatbildung zuzusetzen. Als Schutzkolloide sind dieselben polymeren Stoffe geeignet, die weiter oben als für die Suspensionspolymerisation brauchbar beschrieben worden sind. Auch die zu verwendenden Mengen an Schutzkolloid liegen üblicherweise in derselben Grössenordnung wie oben angegeben.

Für die Suspensions- und die Fällungspolymerisation gelten gemeinsam folgende Kriterien:

Die Polymerisationskonzentrationen liegen zwischen 20 und 70%, bevorzugt 30 und 60%.

Zur Erzielung von Copolymeren mit niedrigen Restgehalten an monomerer Dicarbonsäure oder monomerem Dicarbonsäureanhydrid legt man mindestens 1/3 der Dicarbonsäure oder des Dicarbonsäureanhydrids mit den Lösungsmitteln im Reaktor vor und fährt den Rest Dicarbonsäure oder Dicarbonsäureanhydrid in 2/3 der Zulaufzeit der Monocarbonsäure zu. Meist ist es von Vorteil, Dicarbonsäure(anhydrid) insgesamt im Reaktor vorzulegen. Die Monocarbonsäure muss immer zugefahren werden, wobei Zulaufzeiten von 2 bis 10 Stunden, vorzugsweise 3 bis 7 Stunden, erforderlich sind. Die Esterkomponente der Formel II und/oder III und gegebenenfalls das carboxylgruppenfreie Comonomere können sowohl ganz als auch teilweise vorgelegt oder auch mit der Monocarbonsäure zudosiert werden.

Die Polymerisationstemperatur liegt zwischen 50 und 180°C, wobei es von Vorteil ist, bei Temperaturen von 50 bis 100°C die Hauptreaktion durchzuführen, um Copolymere mit mittleren K-Werten zu erzielen und dann zum Auspolymerisieren die Temperaturen auf max. 180°C zu erhöhen, um niedrige Restgehalte an monomerer Dicarbonsäure zu erzielen.

Als radikalische Initiatoren sind alle Radikalspender geeignet, die bei den gewählten Temperaturen eine Halbwertszeit von < 3 Stunden besitzen. Wird beispielsweise beiniedriger Temperatur anpolymerisiert und bei höherer Temperatur auspolymerisiert, so muss mit mindestens 2 Initiatoren gearbeitet werden. Beispielsweise sind für die genannten Polymerisationstemperaturen folgende Initiatoren geeignet:

Temp.: 50 bis 60°C:

Acetylcyclohexansulfonylperoxid, Diacetylperoxidicarbonat, Dicyclohexylperoxidicarbonat, Di-2-ethylhexylperoxidicarbonat, tert. -Butylperneodecanoat, 2,2′-Azobis-(4-methoxi-2,4-dimethylvaleronitril)

Temp.: 70 bis 80°C:

tert.-Butylperpivalat, Dioctanoylperoxid, Dilauroylperoxid, 2,2--Azobis-(2,4-dimethylvaleronitril)

Temp.: 90 bis 100°C:

Dibenzoylperoxid, tert.-Butylper-2-ethylhexanoat, tert.-Butylpermaleinat, 2,2-Azobis-(isobutyronitril)

Temp.: 110 bis 120°C:

Bis-(tert.-butylperoxi)-cyclohexan, tert.-Butylperoxiisopropylcarbonat, tert.-Butylperacetat

Temp.: 130 bis 140°C:

2,2-Bis-(tert.-butylperoxi)-butan, Dicumylperoxid, Di-tert.-amylperoxid, Di-tert.-butylperoxid

Temp.: 150°C:

p-Menthanhydroperoxid, Pinanhydroperoxid, Cumolhydroperoxid, tert.-Butylhydroperoxid.

Durch die Mitverwendung von Redox-Coinitiatoren, beispielsweise Benzoin, Dimethylanilin sowie organisch löslicher Komplexe und Salze von Schwermetallen, wie Kupfer, Kobalt, Mangan, Eisen, Nickel und Chrom, können die Halbwertszeiten der genannten Peroxide, besonders der Hydroperoxide, verringert werden, so dass beispielsweise tert.-Butylhydroperoxid in Gegenwart von 5 ppm Kupfer-II-Acetylacetonat bereits bei 100°C wirksam ist.

Für die Polymerisation geeignete Apparaturen sind übliche Rührkessel, z.B. solche mit Anker-, Blatt-, Impeller- oder Mehrstufenimpulsgegenstromrührer. Besonders geeignet sind Apparaturen, die im Anschluss an die Polymerisation die direkte Isolierung des Festproduktes gestatten, wie z.B. Schaufeltrockner.

Die erhaltenen Polymerisatsuspensionen können direkt in Verdampfern, wie Bandtrocknern, Schaufeltrocknern, Sprühtrocknern und Wirbelbetttrocknern, getrocknet werden. Man kann aber auch die Polymerisate durch Filtrieren oder Zentrifugieren von der Hauptmenge der Lösungsmittel abtrennen und gegebenenfalls durch Nachwaschen mit frischen Lösungsmitteln Reste von Initiator, Monomeren und Schutzkolloiden entfernen und erst dann trocknen.

Meist fallen die Copolymeren, besonders wenn in Gegenwart von Schutzkolloiden gearbeitet wird, in Form feiner Pulver an, die oft den pulver- oder granulatförmigen Waschmitteln ohne weiteres zugemischt werden können. Oftmals ist es jedoch von Vorteil, die Copolymerisatpulver durch Mischen mit Alkalicarbonaten in Salze überzuführen und dann erst den Waschmitteln zuzumischen.

Aus den Copolymerisatsuspensionen können auch durch Zugabe von Wasser und anschliessendes Abdestillieren des Lösungsmittels mit Wasserdampf wässrige Polymerisatlösungen erhalten werden, die dann je nach Bedarf mit Alkali, Aminen, Alkanolaminen oder Ammoniak neutralisiert werden können.

Eine bevorzugte Methode ist die Copolymerisation in wässriger Lösung. Dabei geht man in der Weise vor, dass man zunächst eine wässrige Lösung der Dicarbonsäure, ihres Alkalimetallsalzes oder Anhydrids vorlegt — der pH-Wert kann in weiten Grenzen, vorzugsweise zwischen 2 und 10 schwanken, lediglich beim Einsatz von Anhydriden sollte nicht über den Neutralpunkt hinausgegangen werden — und anschliessend innerhalb 3 bis 10 Stunden, vorzugsweise 5 bis 8 Stunden die Monocarbonsäure bzw. ihr Alkalimetallsalz und den Initiator, zweckmässigerweise ebenfalls in wässriger Lösung, zufügt. Die Esterkomponente der Formel II und/oder III und gegebenenfalls ein oder mehrere carboxylgruppenfreie Monomere können sowohl ganz als auch teilweise vorgelegt oder auch, was bevorzugt ist, mit der Monocarbonsäure zudosiert werden.

Bei einer besonders bevorzugten Ausführungsform werden die freien Carbonsäuren in ihrer Gesamtheit zu 20 bis 80%, vorzugsweise 30 bis 70% neutralisiert. Dies kann dadurch erfolgen, dass man die Dicarbonsäuren oder einen Teil davon in Form ihrer Salze, und die Monocarbonsäuren in freier Form einsetzt. Man kann aber auch umgekehrt verfahren und die Dicarbonsäuren in freier Form oder— soweit möglich - als Anhydride und die Monocarbonsäuren in Form ihrer Salze verwenden. In jedem Fall wird man dafür Sorge tragen, dass das Verhältnis freier Säuren zu den Salzen einem Gesamtneutralisationsgrad im oben genannten Bereich entspricht.

Vorzugsweise setzt man Alkalimetallsalze dieser Säuren ein; unter diesen wählt man zweckmässigerweise die am leichtesten erhältlichen, nämlich die Natrium- oder Kaliumsalze, insbesondere die Natriumsalze. Es sind aber auch Ammoniumsalze und organische Aminsalze, wie die der Tri-$C_1$- bis $C_4$-Alkylamine, des Hydroxyethylamins, der Mono-, Di- oder Tri-$C_1$- bis $C_4$-alkanolamine oder deren Mischungen geeignet und manchmal von Vorteil.

Die Polymerisation wird in Gegenwart radikalbildender Initiatoren durchgeführt. Als wasserlösliche radikalbildende Initiatoren sind für die Polymerisation z.B. Wasserstoffperoxid, Peroxidisulfate, vor allem Na- oder Ammoniumperoxidisulfat, oder Azo- bis-(2-aminopropan)-hydrochlorid geeignet. Vorzugsweise verwendet man Wasserstoffperoxid, und ganz besonders bevorzugt ist eine Mischung von Wasserstoffperoxid und einem Peroxidisulfat.

Die Initiatoren sind zu 0,5 bis 5 Gew.-% bezogen auf die Summe der Monomeren — im Ansatz zugegen. Die Polymerisation findet in wässrigem Medium statt. Hierbei sollte die Konzentration zweckmässigerweise so gewählt werden, dass die wässrige Lösung 20 bis 70 Gew.-%, vorzugsweise 40 bis 60 Gew. -% an Gesamtmonomeren enthält. Die Reaktionstemperatur kann in weiten Grenzen schwanken, zweckmässigerweise wählt man Temperaturen zwischen 60 und 150°C, vorzugsweise 100 bis 130°C. Als Reaktionsgefässe wählt man, falls oberhalb der Siedetemperatur des Wassers gearbeitet wird, Druckgefässe, wie Autoklaven.

Ausserdem können die bei radikalischen Polymerisationen in wässrigem Medium üblichen Regler, wie Thioglycolsäure oder $C_1$-$C_4$-Aldehyde, oder Kettenverlängerer wie Methylenbisacrylamid oder Divinylglykol zum Einsatz gelangen und zwar — bezogen auf die Summe der Monomeren — zu 0,1 bis 2 bzw. 0,5 bis 5 Gew.-%.

Die Polymerisate weisen — gemessen in 2%iger wässriger Lösung — K-Werte zwischen 8 und 80, meistens aber zwischen 20 und 60 auf.

Oft ist es von Vorteil, nach der Polymerisation die Copolymeren völlig zu neutralisieren. Je nach Verwendung in pulverförmigen oder flüssigen Waschmitteln kommen als Neutralisationsmittel dann vorzugsweise Alkalihydroxide oder Alkanalamine, wie insbesondere Ethanolamin, Diethanolamin und Triethanolamin, in Frage.

Die erfindungsgemässen Copolymerisate können aufgrund ihrer Eigenschaften in vorteilhafter Weise als Gerüststoffe (Builder) in Waschmitteln und damit anstelle von Phosphaten verwendet werden.

Sie erhöhen in pulverförmigen Waschmitteln die Primärwaschwirkung, verhindern die Vergrauung des gewaschenen weissen Materials und setzen die Inkrustierung herab. Von besonderer technischer Bedeutung ist dabei, dass die vergrauungsinhibierende Wirkung nicht nur gegenüber reiner Baumwolle, sondern in beachtlichem Ausmass auch gegenüber den weit verbreiteten Baumwoll-Polyester-Mischungen eintritt. Sie vereinigen damit Eigenschaften, für die in der Praxis häufig jeweils ein besonderer Hilfsstoff verwendet wird. Überdies sind sie als Stabilisatoren für Perverbindungen und als Weichermachermittel für die zu behandelnden Fasern wirksam.

Bei Verwendung in flüssigen, nicht phosphathaltigen Waschmitteln ist die Verträglichkeit deutlich günstiger gegenüber rein ionisch aufgebauten Polyelektrolyten, so dass es weniger zu Phasentrennungen kommt.

Die neuen Copolymeren können auch sehr vorteilhaft als Gerüstsubstanzen (Builder) in Geschirrspülmitteln und Reinigungsmitteln verwendet werden.

Gegenstand der Erfindung sind demnach auch pulverförmige und flüssige Waschmittel-, Spülmittel- und Reinigerformulierungen, die die erfindungsgemässen Copolymeren in einer Menge von 0,5 bis 10 Gew.-% neben den üblichen Bestandteilen enthalten.

Bei den im Phosphatgehalt reduzierten Waschmitteln, d.h. bei der gegenwärtigen Gesetzeslage bei Waschmitteln mit einem Phosphatgehalt um 20%, bezogen auf das Gesamtgewicht, kommen insbesondere Mengen bis zu etwa 5 Gew.-% und bei den phosphatfreien zweckmässig höhere Mengen zwischen etwa 2 und 10 Gew.-% in Betracht.

Solche Waschmittel enthalten z.B. zusätzlich anionische Tenside, wie Alkylbenzolsulfonsäuresalze, Seifen, Fettalkoholsulfate, Olefinsulfate oder Paraffinsulfonate, nichtionische Tenside, wie Fettalkoholpolyglykolether oder Alkylphenolpolyglykolether, oder zwitterionische Tenside, Lösungsvermittler, wie Xylol- oder Cumolsulfonate, Glykole oder Alkohole, Bleichmittel, wie Natriumperborat, Bleichaktivatoren und Stellmittel, wie Natriumsulfat insbesondere bei pulverförmigen Waschmittelzubereitungen, gegebenenfalls weitere Gerüstsubstanzen, Natriumtriphosphat sowie optische Aufheller, Enzyme, Parfümöle und/oder Duftstoffe und Schaumregulatoren, wie dem Fachmann allgemein bekannt.

Bevorzugt sind solche erfindungsgemässen Waschmittel, die frei von komplexbildenden Phosphonsäuren sind. Spülmittel und Reiniger enthalten z.B. neben den oben bezeichneten Tensiden und sonstigen Zusatzstoffen je nach besonderem Verwendungszweck alkalisch reagierende Stoffe und chhlorabspaltende Komponenten.

Die nun folgenden Beispiele erläutern die Erfindung. Angegebene Teile sind Gewichtsteile, soweit sie nicht anders bezeichnet werden. Raumteile verhalten sich zu Gewichtsteilen wie Liter zu Kilogramm. Die K-Werte wurden nach H. Fikentscher, Cellulosechemie 13, S. 60 (1932) in 2%iger Lösung in Wasser bei 25°C bestimmt.

Beispiele zur Herstellung der Polymeren

*Beispiel 1 bis 3*

In einem mit Rührer versehenen Reaktor werden 182 Teile einer 55%igen Suspension eines Copolymeren aus 55 Gew.-% Acrylsäure und 45 Gew.-% Maleinsäureanhydrid (K-Wert: 40) in Xylol mit in der Tabelle angegebenen Mengen eines Alkylpolyglykolethers, der aus $C_{13}$-$C_{15}$-Oxoalkohol mit einem Ethylenoxidblock von 7 Einheiten besteht, und 0,5 Teilen p-Toluolsulfansäure 2,5 Stunden bei 80°C erhitzt. Anschliessend wird mit 150 Teilen Wasser verdünnt und durch Einleiten von Wasserdampf das Xylol abdestilliert, bis eine Temperatur von 100°C erreicht ist. Nach dem Abkühlen wird mit Triethanolamin neutralisiert bis zu einem pH-Wert von 7,0 bis 7,5 und nochmals mit 150 Teilen Wasser verdünnt.

| Beispiel Nr. | Alkohol-zusatz (Teile) | Feststoff-gehalt (%) | Aussehen der Lösung |
|---|---|---|---|
| 1 | 12 | 18,6 | hellgelb, klar |
| 2 | 24 | 24,3 | gelb, klar |
| 3 | 48 | 18,7 | gelb, klar |

*Beispiele 4 bis 22*

In einem mit Rührer versehenen Reaktor werden 336 Teile vollentsalztes Wasser, Maleinsäureanhydrid (Menge siehe Tabelle) und Natriumhydroxid (Menge siehe Tabelle) zum Sieden erhitzt und eine Mischung von 299 Teilen vollentsalztem Wasser, Acrylsäure (Menge siehe Tabelle) und Monoester aus Maleinsäure und einer OH-gruppenhaltigen Verbindung (Art und Menge siehe Tabelle) innerhalb 5 Stunden und eine Lösung von 185 Teilen vollentsalztem Wasser, 4,65 Teilen Natriumperoxidisulfat und 15,45 Teilen Wasserstoffperoxid 30%ig innerhalb 6 Stunden zudosiert. Anschliessend wird noch 2 Stunden erhitzt und nach Abkühlen mit Triethanolamin weiter neutralisiert.

*Tabelle*

| Beispiel Nr. | MSA Teile | NaOH Teile | AS Teile | MS-Monoester mit Teile | OH-Verbindung Art | Feststoffgehalt (%) | K-Wert |
|---|---|---|---|---|---|---|---|
| 4 | 186,1 | 136,7 | 220,3 | 23,2 | Methyldiglykol | 47,1 | 39,1 |
| 5 | 176,3 | 129,5 | 208,7 | 46,4 | Methyldiglykol | 47,3 | 36,3 |
| 6 | 156,7 | 115,8 | 185,5 | 92,8 | Methyldiglykol | 45,9 | 31,6 |
| 7 | 186,1 | 136,7 | 220,3 | 23,2 | Ethyltriglykol | 47,8 | 39,7 |
| 8 | 176,3 | 129,5 | 208,7 | 46,4 | Ethyltriglykol | 47,3 | 36,0 |
| 9 | 156,7 | 115,8 | 185,5 | 92,8 | Ethyltriglykol | 45,7 | 32,2 |
| 10 | 186,1 | 136,7 | 220,3 | 23,2 | Butyldiglykol | 46,8 | 40,1 |
| 11 | 176,3 | 129,5 | 208,7 | 46,4 | Butyldiglykol | 47,9 | 37,1 |
| 12 | 156,7 | 115,8 | 185,5 | 92,8 | Butyldiglykol | 47,0 | 30,4 |
| 13 | 186,1 | 136,7 | 220,3 | 23,2 | $C_{13}$-$C_{15}$-Alkohol + 3 EO | 46,6 | 39,8 |
| 14 | 176,3 | 129,3 | 208,7 | 46,4 | $C_{13}$-$C_{15}$-Alkohol + 3 EO | 46,1 | 37,6 |
| 15 | 156,7 | 115,8 | 185,5 | 92,8 | $C_{13}$-$C_{15}$-Alkohol + 3 EO | 45,7 | 34,9 |
| 16 | 186,1 | 136,7 | 220,3 | 23,2 | $C_{13}$-$C_{15}$-Alkohol + 7 EO | 47,0 | 39,5 |
| 17 | 176,3 | 129,5 | 208,7 | 46,4 | $C_{13}$-$C_{15}$-Alkohol + 7 EO | 46,5 | 36,6 |
| 18 | 156,7 | 115,8 | 185,5 | 92,8 | $C_{13}$-$C_{15}$-Alkohol + 7 EO | 46,3 | 34,5 |
| 19 | 137,1 | 100,7 | 162,3 | 131,9 | $C_{13}$-$C_{15}$-Alkohol + 7 EO | 44,7 | 33,5 |
| 20 | 186,1 | 136,7 | 220,3 | 23,2 | $C_{16}$-$C_{18}$-Alkohol + 3 EO | 46,8 | 39,2 |
| 21 | 176,3 | 129,5 | 208,7 | 46,4 | $C_{16}$-$C_{18}$-Alkohol + 3 EO | 46,3 | 37,0 |
| 22 | 156,7 | 115,8 | 185,5 | 92,8 | $C_{16}$-$C_{18}$-Alkohol + 3 EO | 45,9 | 33,0 |

MSA = Maleinsäureanhydrid
AS = Acrylsäure
MS = Maleinsäure
EO = Ethylenoxid

*Beispiel 23 bis 26*

Man arbeitet gemäss den Beispielen 4 bis 22, nur werden statt der Maleinsäureester Ester der Acrylsäure mit einer OH-gruppenhaltigen Verbindung eingesetzt (siehe Tabelle).

| Beispiel Nr. | MSA Teile | NaOH Teile | AS Teile | Acrylsäureester mit Teile | OH-Verbindung Art | Feststoffgehalt (%) | K-Wert |
|---|---|---|---|---|---|---|---|
| 23 | 186,1 | 136,7 | 220,3 | 23,2 | $C_{13}$-$C_{15}$-Alkohol + 12 EO | 47,7 | 40,0 |
| 24 | 176,3 | 129,5 | 208,7 | 46,4 | $C_{13}$-$C_{15}$-Alkohol + 12 EO | 47,7 | 37,5 |
| 25 | 156,7 | 115,8 | 185,5 | 92,75 | $C_{13}$-$C_{15}$-Alkohol + 12 EO | 50,7 | 32,0 |
| 26 | 176,3 | 129,5 | 208,7 | 46,4 | $C_{16}$-$C_{18}$-Alkohol + 25 EO | 47,4 | 37,0 |

*Beispiel 27 bis 32*

In einem mit Rührer versehenen Reaktor werden 336 Teile vollentsalztes Wasser, Dicarbonsäure bzw. deren Anhydridform und Natriumhydroxid zum Sieden auf 100°C erhitzt und eine Mischung von 299 Teilen vollentsalztes Wasser, ungesättigte Monocarbonsäure, gegebenenfalls carboxylgruppenfreies ungesättigtes Monomeres und Ester von ungesättigten Carbonsäuren mit OH-gruppenhaltigen Verbindungen innerhalb 4 Stunden und eine Lösung von 15,45 Teilen Wasserstoffperoxid, 30%ig, 4, 65 Teile Natriumperoxidisulfat in 100

Teilen vollentsalztem Wasser innerhalb 5 Stunden zudosiert. Anschliessend wird noch 2 Stunden bei 100°C nacherhitzt, abgekühlt und mit Triethanolamin weiter neutralisiert. Art und Menge der eingesetzten Monomeren sind der nachfolgenden Tabelle zu entnehmen.

*Tabelle zu Beispiel 27 bis 32*

| Beisp. | Dicarbonsäure (anh) | | NaOH | Monocarbonsäure | | COOH-freies Monomeres | | Ester aus ungesätt. Carbonsäure mit OH-gruppenhalt. Verbdg. | | Feststoffgehalt | K-Wert |
|---|---|---|---|---|---|---|---|---|---|---|---|
| Nr. | Art | Teile | Teile | Art | Teile | Art | Teile | Art | Teile | (%) | |
| 27 | MSA<br>IS | 39,2<br>92,7 | 80 | AS | 231,9 | — | — | Maleinsäure-di-methyldi-glykolester | 92,7 | 47,9 | 42,0 |
| 28 | MSA | 117,5 | 86,4 | AS | 208,7 | AMPS | 46,4 | Maleinsäure-mono-($C_{16}$/$C_{18}$-Talgfett-alkohol + 80 EO)-ester | 69,6 | 50,3 | 63,5 |
| 29 | MSA | 156,7 | 115,2 | AS<br>MAS | 139,1<br>92,7 | — | — | Maleinsäure-mono-($C_{13}$/$C_{15}$-Oxoal-kohol + 16 EO + 4 PO)-ester | 46,4 | 47,4 | 40,0 |
| 30 | IS | 139 | 77 | AS | 231,9 | VAc | 46,4 | Maleinsäure-mono-($C_{13}$/$C_{15}$-Oxoal-kohol + 9 EO + 2 BO)-ester | 46,4 | 48,3 | 53,5 |
| 31 | MSA | 156,7 | 115,2 | AS | 185,5 | DEAEA | 46,4 | Maleinsäure-mono-($C_{13}$/$C_{15}$-Oxoal-kohol + 7 PO + 8 EO)-ester | 46,4 | 47,9 | 36,5 |
| 32 | MSA | 117,6 | 86,4 | AS | 208,7 | AM | 23,2 | Acrylsäure-($C_{16}$/$C_{18}$-Talg-fettalkohol + 80 EO)-ester | 92,8 | 47,6 | 56,0 |

MSA = Maleinsäureanhydrid
IS = Itaconsäure
AS = Acrylsäure
MAS = Methacrylsäure
AMPS = 2-Acrylamido-2-methylpropylsulfonsäure
VAc = Vinylacetat
DEAEA = Diethylaminoethylacrylat
AM = Acrylamid
EO = Ethylenoxid
PO = Propylenoxid
BO = Butylenoxid

Bei Beispiel 31 liegen PO und EO in statistischer Verteilung vor, bei den übrigen Beispielen enthalten die Ester Polyalkylenoxidblöcke in der angegebenen Reihenfolge.

*Beispiel 33*

In einem mit Rührer versehenen Reaktor werden 136 Teile Maleinsäureanhydrid, 550 Teile techn. Isomerengemisch von Xylol und 2,4 Teile Polyethylvinylether vom K-Wert 50 (gemessen 1 %ig in Cyclohexanon) gelöst, 70%ig in Toluol in einem schwachen Stickstoffstrom erhitzt und innerhalb 3 Stunden eine Mischung aus 136 Teilen Acrylsäure, 34 Teilen Hydroxyethylacrylat und 45 Teilen Maleinsäure-mono-(ölsäureamid + 10 Ethylenoxideinheiten)-ester sowie eine Lösung von 3,4 Teilen tert.Butylperoktoat in 50 Teilen Xylol gleichmässig zudosiert. Anschliessend wird der Ansatz auf 134°C bis zum Sieden erhitzt und innerhalb 1 Stunde eine Lösung

von 3,4 Teilen Ditertiärbutylperoxid in 50 Teilen Xylol zudosiert und nach 1 Stunde nacherhitzt. Die viskose Polymerisatsuspension wird auf eine Glasschale geschüttet und in einem Vacuumtrokkenschrank bei 70°C unter Wasserstrahlvacuum das Xylol abgedampft. 100 Teile des Trockenprodukts werden in einer Kugelmühle mit 53 Teilen pulverförmigem Natriumhydroxid 12 Stunden gemischt und können unmittelbar pulverförmigen Waschmitteln oder auch in Form von wässrigen Lösungen Waschmittelslurries oder flüssigen Waschmittelformulierungen zugesetzt werden.

Der K-Wert des Natriumsalzes des Copolymeren beträgt 43.

*Beispiel 34*

In einem mit Rührer versehenen Reaktor werden 500 Teile Cyclohexan, 96 Teile Maleinsäureanhydrid, 7 Teile Polyethylvinylether vom K-Wert 50 (gemessen 1 %ig in Cyclohexanon) gelöst, 70%ig in Tolual bis zum Sieden auf 82°C erhitzt und in 3 Stunden eine Mischung aus 72 Teilen Acrylsäure und 36 Teilen des Esters der Acrylsäure mit Ölsäure + 6 Ethylenoxideinheiten, in 4 Stunden 36 Teile Vinylmethylether und in 5 Stunden eine Lösung von 3,6 Teilen Tertiärbutylperoktoat in 80 Teilen Cyclohexan gleichmässig zudosiert. Anschliessend wird noch 2 Stunden nacherhitzt. Die schwach viskose Suspension wird nun in einem Sprühtrockner getrocknet. 100 Teile des Trockenproduktes werden in einer Kugelmühle mit 69 Teilen Kaliumhydroxidpulver 12 Stunden gemischt. Das Polymerisatpulver kann unmittelbar pulverförmigen Waschmitteln oder in Form der wässrigen Lösung Waschmittelslurries oder flüssigen Waschmittelformulierungen zugesetzt werden.

Der K-Wert des Kaliumsalzes beträgt 58.

Beispiele für die Verstärkung der Primärwaschkraft von Flüssigwaschmitteln

*Prüfbedingungen*

Die Waschversuche wurden im Launder-Ometer der Firma Atlas/Chikago, USA durchgeführt. Temperatur 60°C, Waschdauer 30 min, Wasserhärte 2,5 mMol Ca/l, Flottenverhältnis 1: 50(250 ml) Prüfgewebe: je 5 g WFK-Schmutzgewebe (Baumwoll-Testgewebe der Wäschereiforschungsanstalt Krefeld)
Waschmitteldosierung: 5 g/l Flüssigwaschmittel

Geprüftes Waschmittel A (Flüssigwaschmittel des Handels):

19% $C_{13}/C_{15}$-Fettalkohol + ca. 7 Mol EO
15% Alkylbenzolsulfonat (Na-Salz), berechnet 100%
14% Fettsäure, Na-Salz (Seife)
3% freie Fettsäure
5% Triethanolamin
7% Ethanol
1% Polypropylenglykol
35% Wasser

Rest optischer Aufheller, Trübungsmittel, Parfümöl, Farbstoff, Enzyme.

Geprüftes Waschmittel B folgender Zusammensetzung:

10% Dodecylbenzolsulfonat (Na-Salz) berechnet 100%ig
20% $C_{13}/C_{15}$-Fettalkohol + 7 Mol EO
15% Kaliumkokosseife (30%ig)
1% Polypropylenglykol (MG 600)
ca. 53% Wasser

Rest optische Aufheller, Parfümöl.

*Prüfergebnisse Primärwaschwirkung — % Remission (gemessen mit Elrepho)*

| Zusatz zum Waschmittel | | | | | Weissgrad im Falle Waschmittel A | Waschmittel B |
|---|---|---|---|---|---|---|
| ohne Zusatz | | | | | 72,0 | 71,0 |
| 10% Produkt nach Beispiel | | | | 1 | 78,0 | 74,0 |
| 5% | » | » | » | 1 | 76,1 | 75,5 |
| 10% | » | » | » | 6 | 78,2 | 75,4 |
| 10% | » | » | » | 11 | 80,0 | 75,0 |
| 5% | » | » | » | 11 | 78,0 | 74,0 |
| 5% | » | » | » | 16 | 77,5 | 74,0 |
| 2% | » | » | » | 16 | 73,5 | 72,6 |
| 10% | » | » | » | 5 | 77,0 | 75,4 |
| 5% | » | » | » | 5 | 75,2 | 74,1 |
| 2% | » | » | » | 5 | 73,5 | 73,1 |
| 10% | » | » | » | 13 | 80,0 | 78,0 |
| 10% | » | » | » | 14 | 80,5 | 78,8 |

Ein Weissgradunterschied von 1-2% Remission ist vom menschlichen Auge bereits wahrnehmbar.

Beispiele für die bessere Verträglichkeit der erfindungsgemässen Copolymerisate in einem Flüssigwaschmittel

| Waschmittelformulierungen: | C | D | E | F | G | H |
|---|---|---|---|---|---|---|
| $C_{13}/C_{15}$-Oxoalkoholheptaglykolether | 22 | 22 | 22 | 22 | 22 | 22 |
| Kokosfettsäure | 8,8 | 8,8 | 8,8 | 8,8 | 8,8 | 8,8 |
| Triethanolamin | 13,2 | 13,2 | 13,2 | 13,2 | 13,2 | 13,2 |
| Ethanol | 7 | 7 | 7 | 7 | 7 | 7 |
| MSA/AS-Copolymeres (K-Wert 36) | — | 2 | 3 | | | |
| Copolymeres gemäss Beispiel 17 | | | | 2 | 3 | |
| Copolymeres gemäss Beispiel 16 | | | | | | 3 |
| Stabilität | K | t | ts | K | K | K |
| Weissgrad (% Remission) | 72,7 | 75,1 | 75,5 | 75,0 | 75,5 | 75,4 |

K = klare Flüssigkeit
t = trübe Flüssigkeit
ts = trübe Flüssigkeit, separiert nach kurzer Zeit
Weissgrad gemessen nach Prüfung der Primärwaschkraft wie in dem vorhergehenden Beispiel beschrieben.

Die Zahlen in der Tabelle sind Gewichtsprozente, die mit Wasser auf 100 zu ergänzen sind.

Die Waschmittel F bis H lassen sich mit den erfindungsgemässen Copolymeren als klare Flüssigkeiten formulieren und erhöhen die Waschwirkung.

Beispiele zur Verbesserung von Primärwaschwirkung, der vergrauungsinhibierenden Wirkung auf Baumwolle, Polyestergewebe und Baumwoll/Polyester-Mischgewebe sowie der inkrustierungsinhibierenden Wirkung bei pulverförmigen Waschmitteln.

*Prüfbedingungen*

Prüfgerät: Launder-Ometer der Fa. Atlas, Chikago, 30 min bei 35-60°C

Wasserhärte 3 mMol Ca/l
Flottenverhältnis 1: 10 (250 ml)
Prüfgewebe:
10 g Baumwollfrottee, gebleicht
5 g Baumwoll/Polyester-Mischgewebe (BASF-Lager Nr. 778)
5 g Polyestergewebe (BASF-Lager Nr. 626)
5 g WFK-Schmutzgewebe (Baumwoll-Testgewebe der Wäschereiforschungsanstalt Krefeld)

Waschmittellösung:

5 g/l Waschmittel folgender Zusammensetzung:
10 % Dodecylbenzolsulfonat
5 % Talgfettalkohol + 11 Mol EO
3 % Seifenspäne
20 % Natriumtriphosphat
20 % Natriumperborat
20 % Natriumsulfat
3 % Carboxymethylcellulose 60%ig
2,5% des zu prüfenden Produktes gemäss der Erfindung, berechnet 100%

Die drei weissen Testmaterialien werden 10 mal hintereinander zusammen mit Schmutzgewebe, das bei jeder Wäsche erneuert wird, gewaschen.

Der Weissgrad der anfangs weissen Gewebe nach 10 Wäschen gibt den Vergrauungseffekt wieder (Sekundärwaschwirkung), der gemittelte Weissgrad aus den jeweils 10 Proben Schmutzgewebe zeigt die Primärwaschwirkung. Die Frotteelappen liefern zusätzlich nach Veraschung bei 600°C den Aschegehalt als Mass für die Inkrustierung.

| | *Prüfergebnisse:* | | *% Weissgrad (Elrepho)* | | | *% Asche* |
|---|---|---|---|---|---|---|
| | Zusatz Waschhilfsmittel | Frottee | PES/BW | PES | WFK | Frottee |
| 1 | ohne Zusatz | 75,2 | 45,7 | 43,4 | 54,8 | 2,38 |
| 2 | Talgfettalkohol + 11 Mol EO | 73,7 | 46,2 | 43,5 | 54,5 | 2,39 |
| 3 | Dodecylbenzolsulfonat | 74,7 | 45,3 | 43,6 | 56,2 | 2,42 |
| 4 | Copolymer MSA/AS (30:70) | 86,4 | 40,0 | 42,1 | 60,2 | 0,18 |
| 5 | Copolymer MSA/MVE | 86,5 | 40,2 | 41,9 | 58,6 | 0,51 |
| 6 | Produkt gemäss Beispiel 1 | 85,8 | 43,2 | 43,2 | 56,5 | 0,71 |
| 7 | » » » 4 | 86,8 | 44,8 | 42,9 | 59,2 | 0,50 |
| 8 | » » » 5 | 85,9 | 44,2 | 43,0 | 57,9 | 0,50 |
| 9 | » » » 6 | 85,3 | 45,2 | 43,1 | 58,0 | 0,62 |
| 10 | » » » 11 | 86,0 | 44,3 | 43,0 | 58,1 | 0,50 |
| 11 | » » » 16 | 85,7 | 44,7 | 44,2 | 57,1 | 0,42 |
| 12 | » » » 17 | 85,7 | 44,5 | 43,3 | 58,5 | 0,46 |
| 13 | » » » 21 | 86,3 | 45,2 | 43,5 | 59,1 | 0,46 |

MVE = Methylvinylether

## Patentansprüche

1. Wasserlösliche Copolymerisate und ihre wasserlöslichen Salze aus 40 bis 90 Gew.-% mindestens einer ethylenisch ungesättigten Monocarbonsäure mit 3 bis 5 C-Atomen, 60 bis 10 Gew.-% mindestens einer ethylenisch ungesättigten Dicarbonsäure mit 1 bis 8 C-Atomen und/oder des entsprechenden Dicarbonsäureanhydrids und bis zu 15 %, bezogen auf das Gesamtgewicht der carboxylgruppenhaltigen Monomeren in ihrer unveresterten Form, Alkylester, gegebenenfalls mit Hydroxyl- oder Aminogruppen im Esterrest, Alkohole, Sulfonsäuren und Ether mit ethylenisch ungesättigten Resten oder Olefine, Diolefine und Styrol, dadurch gekennzeichnet, daß sie mit 2 bis 60 Gew.-%, bezogen auf das Gesamtgewicht der Carbonsäuren und gegebenenfalls

Carbonsäureanhydride, wenigstens einer Verbindung der Formel I

$$R^1Z[(X^1)_m \cdot (X^2)_n \cdot (X^3)_o]H$$

in der

$R^1$ einen $C_1$- bis $C_{18}$-Alkylrest

Z ein Sauerstoffatom oder die Gruppe

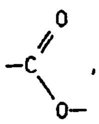 , 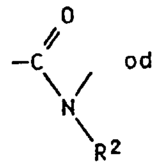 oder 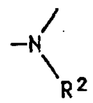

$R^2$ ein Wasserstoffatom, eine Gruppe der Formel

$$[(X^1)_m \cdot (X^2)_n \cdot (X^3)_o]H$$

oder einen Alkylrest mit 1 bis 4 C-Atomen,

$X^1$ eine einpolymerisierte Ethylenoxid-,

$X^2$ eine einpolymerisierte Propylenoxid- und

$X^3$ eine einpolymerisierte Butylenoxid-Einheit und

m, n und o ganze Zahlen von 0 bis 100

bedeuten, wobei die Summe m+n+o 1 bis 100 beträgt und die Alkylenoxideinheiten in Blöcken beliebiger Reihenfolge oder in statistischer Verteilung einpolymerisiert sind, verestert sind.

2. Copolymerisate gemäss Anspruch 1, die — bezogen auf das als freie Carbonsäuren berechnete Gesamtgewicht carboxylgruppenhaltiger, carboxylanhydridgruppenhaltiger und carboxylestergruppenhaltiger Monomerer — 40 bis 70% Monocarbonsäure- und 60 bis 30% Dicarbonsäure(anhydrid)Einheiten enthalten.

3. Copolymerisate gemäss Anspruch 1, die als Monocarbonsäure Acrylsäure und als Dicarbonsäure (anhydrid) Maleinsäure (anhydrid) einpolymerisiert enthalten.

4. Copolymerisate gemäss Anspruch 1, die bis zu 15%, bezogen auf das Gesamtgewicht der carboxylgruppenhaltigen Monomeren in ihrer unveresterten Form, an carboxylgruppenfreien Monomeren einpolymerisiert enthalten.

5. Copolymerisate gemäss Anspruch 1, die mit einer Verbindung der Formel I verestert sind, in der $R^1$ ein Alkylrest mit 1 bis 18 C-Atomen, Z ein Sauerstoffatom und o Null ist.

6. Copolymerisate gemäss Anspruch 1, die mit 5 bis 50%, bezogen auf das Gesamtgewicht an carboxylgruppenhaltigen Monomeren, wenigstens einer Verbindung der Formel I verestert sind.

7. Copolymerisate gemäss Anspruch 1, die mit 8 bis 30%, bezogen auf das Gesamtgewicht an carboxylgruppenhaltigen Monomeren, wenigstens einer Verbindung der Formel I verestert sind.

8. Pulverförmige und flüssige Waschmittel-, Spülmittel- und Reinigerformulierungen, enthaltend ein Copolymerisat nach Anspruch 1, in einer Menge von 0,5 bis 10 Gew.-% neben üblichen Bestandteilen.

9. Verwendung der Copolymerisate gemäss einem der Ansprüche 1 bis 7 als Waschhilfsmittel.

## Claims

1. A water-soluble copolymer and a water-soluble salt thereof which consists of from 40 to 90% by weight of one or more ethylenically unsaturated monocarboxylic acids of 3 to 5 carbon atoms, from 60 to 10% by weight of one or more ethylenically unsaturated dicarboxylic acids of 4 to 8 carbon atoms and/or the corresponding dicarboxylic acid anhydride, and up to 15%, based on the total weight of the carboxyl-containing monomers in their non-esterified form, of alkyl esters, with or without hydroxyl or amino groups in the ester radicals, alcohols, sulfonic acids and ethers having ethylenically unsaturated radicals or olefins, diolefins and styrene, which copolymer is esterified with from 2 to 60% by weight, based on the total weight of the carboxylic acid and of any carboxylic acid anhydride present, of one or more compounds of the formula I

$$R^1Z[(X^1)_m \cdot (X^2)_n \cdot (X^3)_o]H$$

where

$R^1$ is $C_1$-$C_{18}$-alkyl

Z is oxygen or a

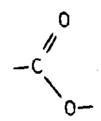 , 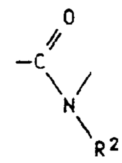 or 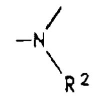 group,

$R^2$ is hydrogen or a group of the formula

$$[(X^1)_m \cdot (X^2)_m \cdot (X^3)_o]H$$

or alkyl of 1 to 4 carbon atoms,

$X_1$ is a copolymerized ethylene oxide unit,

$X^2$ is a copolymerized propylene oxide unit,

$X^3$ is a copolymerized butylene oxide unit, and

m, n and o are each an integer from 0 to 100,

the sum of m + n + o being from 1 to 100 and the alkylene oxide units being copolymerized as blocks in any desired sequence or being copolymerized in random distribution.

2. A copolymer as claimed in claim 1, which contains from 40 to 70% of monocarboxylic acid units and from 60 to 30% of dicarboxylic acid (anhydride) units, the percentages being based on the total weight calculated as free carboxylic acids, of monomers containing carboxyl groups, carboxylic acid anhydride groups and carboxylic ester groups.

3. A copolymer as claimed in claim 1, which contains, as copolymerized units, acrylic acid as the monocarboxylic acid and maleic acid (anhydride) as the dicarboxylic acid (anhydride).

4. A copolymer as claimed in claim 1, which contains, as copolymerized units, up to 15%, based on the total weight of the carboxyl-containing monomers in their non-esterified form, of carboxyl-free monomers.

5. A copolymer as claimed in claim 1, which is esterified with a compound of the formula 1, where $R^1$ is alkyl of 1 to 18 carbon atoms, Z is oxygen, and o is zero.

6. A copolymer as claimed in claim 1, which is esterified with from 5 to 50%, based on the total weight of carboxyl-containing monomers, of one or more compounds of the formula I.

7. A copolymer as claimed in claim 1, which is esterified with from 8 to 30%, based on the total weight of carboxyl-containing monomers, of one or more compounds of the formula I.

8. A pulverulent or liquid formulation of a detergent, of a washing agent or of a cleansing agent, which formulation contains, in addition to conventional components, from 0.5 to 10% by weight of a copolymer as claimed in claim 1.

9. The use of a copolymer as claimed in any of claims 1 to 7 as a detergent auxiliary.

## Revendications

1. Copolymères hydrosolubles et sels hydrosolubles de ceux-ci, composés de 40 à 90% en poids d'au moins un acide mono-carboxylique en $C_3$ à $C_5$ à insaturation éthylénique et de 60 à 10% en poids d'au moins un acide dicarboxylique en $C_4$ à $C_8$ à insaturation éthylénique et(ou) anhydride d'acide dicarboxylique correspondant, et jusqu'à 15%, par rapport au poids total des monomères contenant des radicaux carboxyle sous leur forme non estérifiée, d'esters alkyliques, éventuellement avec des radicaux hydroxyle ou amino dans le reste ester, d'alcools, d'acides sulfoniques et d'éthers avec des restes à insaturation éthylénique, ou d'oléfines, de dioléfines et de styrène, caractérisés en ce qu'ils sont estérifiés par 2 à 60% en poids, par rapport au poids total des acides carboxyliques et anhydrides carboxyliques éventuels, d'au moins un composé de la formule I

$$R^1Z\,[(X^1)_m \cdot (X^2)_n \cdot (X^3)_o]\,H \qquad I,$$

dans laquelle

$R^1$ désigne un groupe alkyle en $C_1$ à $C_{18}$,

Z représente un atome d'oxygène ou un groupe

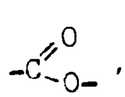 ,

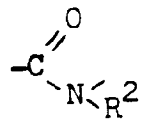 ou 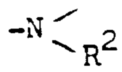 ,

où $R^2$ désigne un atome d'hydrogène, un groupe de la formule

$[(X^1)_m \cdot (X^2)_n \cdot (X^3{}_o]H$

ou un radical alkyle en $C_1$ à $C_4$,

$X^1$ désigne une unité oxyde d'éthylène copolymérisée,

$X^2$ une unité oxyde de propylène copolymérisée et

$X^3$ une unité oxyde de butylène copolymérisée,

m, n et o sont des nombres entiers de 0 à 100 et

la somme m + n + o vaut de 1 à 100, les unités d'oxyde d'alkylène étant copolymérisées en blocs dans un ordre quelconque ou en répartition stochastique.

2. Copolymères suivant la revendication 1, contenant, par rapport au poids total des monomères à groupes carboxyle, anhydride carboxylique et ester carboxylique, calculés comme acides carboxyliques libres, 40 à 70% d'unités acide monocarboxyliques et 60 à 30% d'unités acide (anhydride) dicarboxylique.

3. Copolymères suivant la revendication 1, contenant comme acide monocarboxylique de l'acide acrylique et comme acide (anhydride) dicarboxylique de l'acide ou anhydride maléique.

4. Copolymères suivant la revendication 1, dans lesquels sont copolymérisés jusqu'à 15% du poids total des monomères à groupes carboxyle dans leur forme non estérifiée de monomères exempts de groupes carboxyle.

5. Copolymères suivant la revendication 1, estérifiés par un composé de la formule I, dans laquelle $R^1$ désigne un radical alkyle en $C_1$ à $C_{18}$, Z un atome d'oxygène et o vaut 0.

6. Copolymères suivant la revendication 1, estérifiés par 5 à 50% par rapport au poids total des monomères à groupes carboxyle d'au moins un composé de la formule I.

7. Copolymères suivant la revendication 1, estérifiés par 8 à 30% par rapport au poids total des monomères à groupes carboxyle d'au moins un composé de la formule I.

8. Compositions détergentes, de rinçage et de nettoyage liquides ou pulvérulentes, contenant à côté de composants usuels entre 0,5 et 10% en poids d'un copolymère suivant la revendication 1,

9. Utilisation des copolymères suivant les revendications 1 à 7 comme adjuvants pour produits de lavage.